# EUROPEAN PATENT APPLICATION

(11) **EP 3 683 728 A1**
(43) Date of publication of application: **22.07.2020**
(21) Application number: 17924902.4
(22) Date of filing: 14.09.2017
(51) Int. Cl.: G06K 19/06

(54) **TWO-DIMENSIONAL CODE DISPLAY MEDIUM**

(71) Applicant: MANI, INC., Utsunomiya-shi, Tochigi 321-3231 (JP)
(72) Inventor: MATSUTANI, Kazuhiko, Utsunomiya-shi, Tochigi 321-3231 (JP)
(74) Representative: Gill Jennings & Every LLP
(86) International application number: PCT/JP2017/033335
(87) International publication number: WO 2019/053860

(57) **Abstract**

Provided is a two-dimensional code display medium which displays a distinctive two-dimensional code that is readily noticeable by itself, as well as being easy for a person to visually determine whether or not the two-dimensional code is the person's desired code.

The two-dimensional code display medium according to the present invention is characterized by being provided with an information display surface having therein a display region for displaying a two-dimensional code, wherein the information display surface is square, and one side of the two-dimensional code and one side of the information display surface form an oblique angle therebetween. Further, the oblique angle is preferably 45 degrees.

## Description

### [Technical Field]

The present invention relates to two-dimensional code, and in particular to two-dimensional code display medium for displaying a two-dimensional code.

### [Background Art]

In recent years, two-dimensional codes are used in various fields. For example, by putting a unique two-dimensional code to each product in the manufacturing industry, management operations such as production management, stock/inventory management are possible to be made more efficient and be secured correctly. In particular, there is likely to occur misidentification when small products are subjected to visual management. However, it is possible to prevent the misunderstanding of the products by reading the two-dimensional code with a reading device to manage the two-dimensional code on the server.

### [Disclosure of the Invention]

### [Problems to be Solved by the Invention]

Now, the two-dimensional code attached to the product may have a problem in visibility. For example, it can be difficult to locate a two-dimensional code due to factors such as a symbol and a character string, that are arranged orderly around the two-dimensional code, make the two-dimensional code inconspicuous.

Also, a plurality of two-dimensional codes are, in some cases, displayed. For example, there are cases where it is necessary to divide a two-dimensional code into a plurality of parts due to space restrictions on the display area or where a two-dimensional code is for management by a manufacturer and another two-dimensional code is to be disclosed externally for dealers and end users. On the one hand, a two-dimensional code is divided into a plurality of parts on the premise that all displayed two-dimensional codes are needed to be read. Therefore, unless all the two-dimensional codes are read, an error warning given, thus avoiding occurrence of reading mistake. In case where, on the one hand, when a two-dimensional code for management and a two-dimensional code to be disclosed for external parties are displayed concurrently, there is a risk of overlooking an erroneous reading of the two-dimensional code for management when needed to read the two-dimensional code for external parties. In particular, in case where the standard of the two-dimensional code for management and the standard of the two-dimensional code for external parties are the same, such mistakes are likely to occur.

Therefore, an object of the present invention is to provide a two-dimensional code display medium which displays a distinctive two-dimensional code that is readily noticeable by itself, as well as being easy for a person to visually determine whether or not the two-dimensional code is the person's desired code.

### [Means for solving the problem]

In order to achieve the above objective, according to the present invention, the claim 1 is directed to a two-dimensional code display medium including an information display surface having therein a display region for displaying the two-dimensional code, characterized in that the information display surface and the display region are square, and one side of the two-dimensional code and one side of the information display surface form an oblique angle therebetween.

The claim 2 is directed to a two-dimensional code display medium including an information display surface having therein a display region for displaying the two-dimensional code, characterized in that there are a plurality of the display regions, the first display region displays a two-dimensional code, the second display region displays a one-dimensional code or another two-dimensional code, and one side of the two-dimensional code in the first display region and one side of a straight line of the one-dimensional code or the two-dimensional code in the second display region form an oblique angle therebetween.

The claim 3 is directed to a two-dimensional code display medium including an information display surface having therein a display region for displaying the two-dimensional code, characterized in that an information string is disposed on the information display surface, and an angle formed by one side of the two-dimensional code and the imaginary ruled line or the actual ruled line in the string direction of the information string is oblique.

The claim 4 is characterized in that an additional string is displayed on the outside of the two-dimensional code in parallel with one side of the two-dimensional code.

The claim 5 is characterized in that the oblique angle is 45 degrees.

### [Effects of the Invention]

According to the configuration of claim 1, the two-dimensional code display medium helps recognition of an oblique representation of the code by comparing the code with the information display surface while complying with the standard of the displayed code, thus contributing to the discrimination of the code and the improvement of a profile.

Also, according to the configuration of claim 2, where a plurality of codes are used for a product and one of them are used for disclosure to a recipient and the other may be used for management in a provider, the codes are possible to be discriminated immediately even if the two codes have the same standard, and a profile is possible to be discriminated as an unusual expression.

According to the configuration of claim 3, the two-dimensional code display medium helps recognition of an oblique representation of the code by comparing the code with the information string while complying with the standard of the displayed code, thus contributing to the discrimination of the code and the improvement of a profile.

According to the configuration of claim 4, the two-dimensional code display medium of this invention, recognizes an oblique while complying with the standard of the displayed code, and also is possible to draw attention to a profile on the logo character string or the content of the code associated whole unity with the code.

According to the configuration of claim 5, it is expected to give to the viewer the effect of the impression that the self-assertion is maintained while maintaining the regularity is displayed.

### [Brief Description of Drawings]

FIG. 1 is a front view of displaying a two-dimensional code on a two-dimensional code display medium of the embodiment 1.
FIG. 2 is a front view of displaying a two-dimensional code and a character string on a two-dimensional code display medium of the embodiment 2.
FIG. 3 is a front view of displaying a plurality of two-dimensional codes on a two-dimensional code display medium of the embodiment 3.
FIG. 4 is a front view of displaying a two-dimensional code and a one-dimensional code on a two-dimensional code display medium of the embodiment 3.
FIG. 5 is a front view of displaying a two-dimensional code and a information string on a two-dimensional code display medium of the embodiment 4.

### [Description of Embodiments]

The following embodiments will now be described with reference to the accompanying drawings.

### [Embodiment 1]

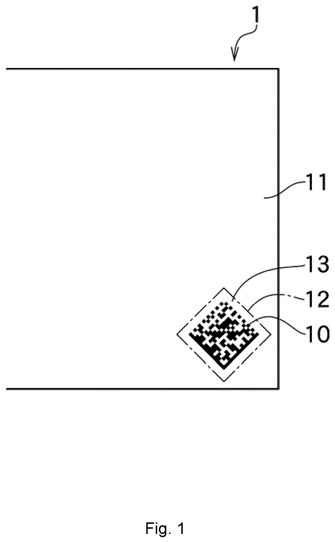

FIG. 1 is a front view of displaying a two-dimensional code 10 on a label 1. The label 1 which is a two-dimensional code display medium in this embodiment constitutes an information display surface 11 as a whole. The label 1 has a display region 12 for displaying the two-dimensional code on the information display surface 11. The display region 12 secures a margin 13. The information display surface 11 and the display region 12 of the label 1 are square, and one side of the two-dimensional code and one side of the information display surface form an oblique angle therebetween. Here, one side of the two-dimensional code 10 refers to one side of the square formed by cells of the code arranged in the square. Accordingly, the two-dimensional code 10 is displayed obliquely in the front view in the display region 12.

As in a two-dimensional code 10, a code having information in vertical and horizontal directions generally connotes a frame or a symbol for determining a position. Therefore, as in the present embodiment, even if an angle formed by one side of the two-dimensional code 10 and one side of the information display surface 11 is oblique, there is no trouble in reading the code. The label 1, which is the two-dimensional code display medium of this embodiment, helps recognition of an oblique representation of the code by comparing the code with the information display surface 11 while complying with the standard of the displayed code, thus contributing to the discrimination of the code and the improvement of a profile.

Here, although the two-dimensional code 10 of this embodiment is a square, it may be another quadrangle, for example, a rectangle. Further, although the display region 12 of this embodiment is a square, the shape is not limited as long as it is possible that the two-dimensional code 10 formed by the square connotes otherwise. A boundary line may appear at positions of one-dot chain lines of the display region 12 of the label 1 in FIG. 1. In the present embodiment, the display region 12 is disposed at the lower right corner of the information display surface 11, but the position of the display region 12 is not limited thereto, and may be at any of the vicinity of the corner portion and the side portion, the center portion, or the intermediate therebetween. In this embodiment, a size of the two-dimensional code 10 and the display area 12 is not limited, and a relative size to the label 1 is not limited.

### [Embodiment 2]

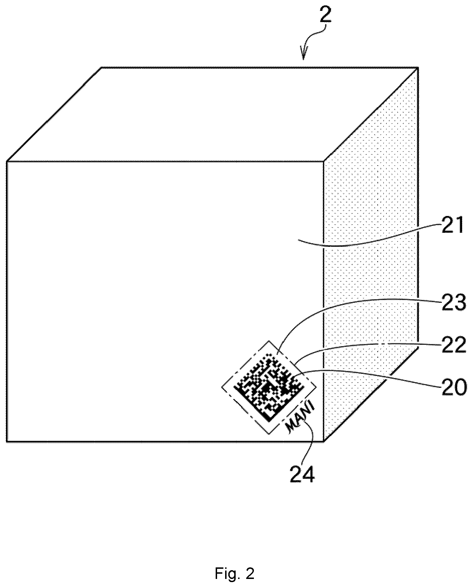

FIG. 2 is a front view displaying a two-dimensional code 20 for a packaging box 2. The packaging box 2 is a two-dimensional code display medium of this embodiment, wherein a front surface is an information display surface 21, but a plurality of or all surfaces may be the information display surface 21. The packaging box 2 has a display region 22 for displaying the two-dimensional code on the information display surface 21. The display region 22 secures a margin 23. The information display surface 21 and the display region 22 of the packaging box 2 are square, and one side of the two-dimensional code 20 and one side of the information display surface 21 form an oblique angle therebetween. Here, one side of the two-dimensional code 20 refers to one side of the square formed by cells of the code arranged in the square. Accordingly, the two-dimensional code 20 is displayed obliquely in the front view in the display region 22.

In this embodiment, the packaging box 2 displays obliquely an additional string 24 on the outside of a two-dimensional code 20 in parallel with one side of a two-dimensional code 20 in a front view. Specifically, the additional string 24 is displayed in parallel with one side of the two-dimensional code 20 at one place on the right lower side out of the display region 22. An example of the additional string 24 is a logo character string or content of the code. So long as the additional string 24 is outside the two-dimensional code 20 and is parallel to one side of the two-dimensional code 20, there is no limitation to its position, and a plurality of the strings are allowable for one code. The packaging box 2, which is the two-dimensional code display medium of this embodiment, permits the viewer of the code to recognize an oblique while complying with the standard of the displayed code, and also is possible to draw attention to a profile on the logo character string or the content of the code associated whole unity with the code.

Here, although the two-dimensional code 20 of this embodiment is a square, it may be another quadrangle, for example, a rectangle. Further, although the display region 22 of this embodiment is a square, the shape is not limited thereto as long as it is possible that the two-dimensional code 20 formed by the square connotes otherwise. A boundary line may appear at positions of one-dot chain lines of the display region 22 of the packaging box 2 in FIG. 2. In the present embodiment, the display region 22 is located at the lower right corner of the information display surface 21, though the position of the display region 22 is not limited, and may be any of the vicinity of the corner portion and the side portion, the center portion, or the intermediate thereof. In this embodiment, a size of the two-dimensional code 20 and the display area 22 is not limited, and a relative size to the packaging box 2 is not limited. In case where the display area 22 is provided in the corner portion, a triangular empty area may be provided, so that any pattern like fitted to the shape of the empty area may be arranged in addition to the additional string 24. Or, in case where the display area 22 is provided in the center, it is possible to arrange any patterns surrounding the display area 22.

### [Embodiment 3]

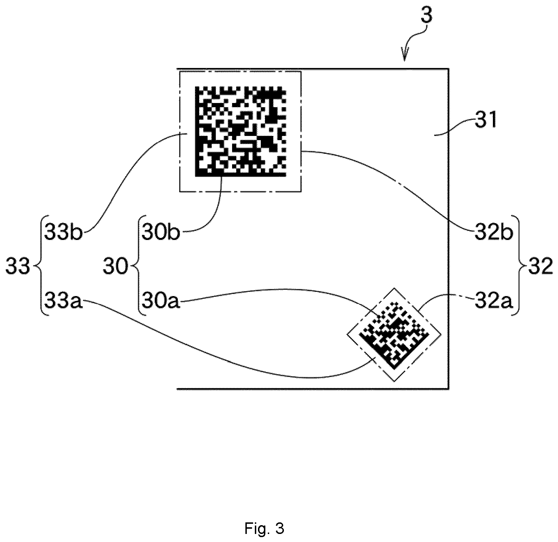

FIG. 3 is a front view of displaying a two-dimensional code 30 on a label 3. The label 3 which is a two-dimensional code display medium in this embodiment is an information display surface 31 as a whole. The label 3 has a display region 32 for displaying the two-dimensional code on the information display surface 31. The display region 32 secures a margin 33 In this embodiment, there are a plurality of the display regions 32, and the first display region is a display region 32a and the second display region is a display region 32b. The two-dimensional code 30a is displayed on the display region 32a, and the two-dimensional code 30b is displayed on the display region 32b, respectively. The display region 32a secures a margin 33a, and the display region 32b secures a margin 33b, respectively. One side of the two-dimensional code 30a and one side of the two-dimensional code 30b form an oblique angle therebetween. Here, one side of the two-dimensional code 30a and one side of the two-dimensional code 30b refers to one side of the squares formed by cells of the codes arranged in the squares.

A plurality of codes may be used for a product, such as a two-dimensional code 30a and a two-dimensional code 30b, one of them may be used for disclosure to a recipient and the other may be used for management in a provider. As in this embodiment, when an angle formed by one side of one code and one side of the other code is an oblique, at least one of them is viewed obliquely in the front view. Even if the two codes have the same standard, the code are possible to be discriminated immediately, and a profile is possible to be discriminated as an unusual expression.

Here, although the two-dimensional code 30 of this embodiment is a square, it may be another quadrangle, for example, a rectangle. Further, although the display region 32 of this embodiment is a square, the shape is not limited thereto as long as it is possible that the two-dimensional code 30 formed by the square connotes otherwise. A boundary line may appear at positions of one-dot chain lines of the display region 32 of the label 3 in FIG. 3. Further, in this embodiment, the display region 32a as the first display region is located on the lower right of the label 3, and the display region 32b as the second display region is located on the upper left side of the label 3. However, the position of the display region 32 is not limited thereto, and may be any of the vicinity of the corner portion, the side portion, the center portion, or the middle portion thereof. In this embodiment, there is no limitation to sizes of the two-dimensional codes 30 and the display areas 32, and a relative size to the label 3 is not limited thereto. However, as shown in Fig. 3, where the sizes of the two-dimensional code 30a and the two-dimensional code 30b are different, the codes is possible to be discriminated more easily.

The plurality of display regions 32 do not necessarily need to be the same information display surface 31. For example, there may be the first display region on a front surface and there may be the second display region on a back surface. Even in this case, if an angle formed by one side of one cord and one side of the other cord is oblique, at least one of them is viewed obliquely in the front view, and the medium is included in the technical scope of the present invention.

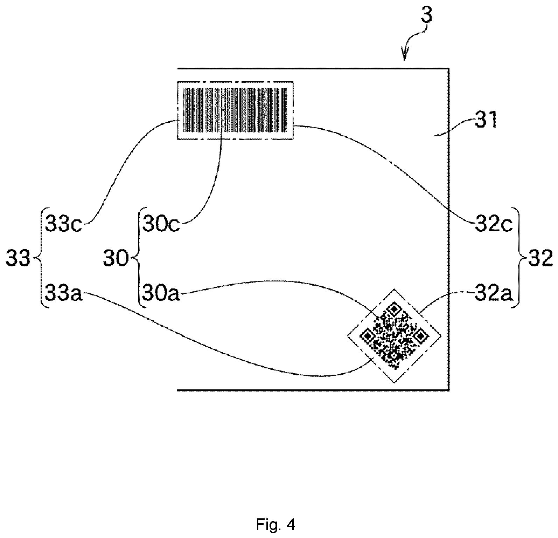

One of the codes in this embodiment may be a one-dimensional code. FIG. 4 is a front view displaying a two-dimensional code 30 on a label 3, and has a plurality of display areas 32 securing a margin 33 in the same manner as in FIG. 3. The first display region is a display region 32a and the second display region is a display region 32c. The two-dimensional code 30a is displayed on the display region 32a, and the one-dimensional code 30c is displayed on the display region 32c, respectively. The display region 32a secures a margin 33a, and the display region 32c secures a margin 33c, respectively. Here, the display region 32c is a rectangle. Even in this case, where an angle formed by one side of the two-dimensional code 30a and a straight line of the one-dimensional code 30c is oblique, at least one of them is viewed obliquely in the front view, and the medium is included in the technical scope of the present invention. Here, the straight line of the one-dimensional code refers to any one of straight bars arranged in parallel to be displayed on the one-dimensional code as a whole.

### [Embodiment 4]

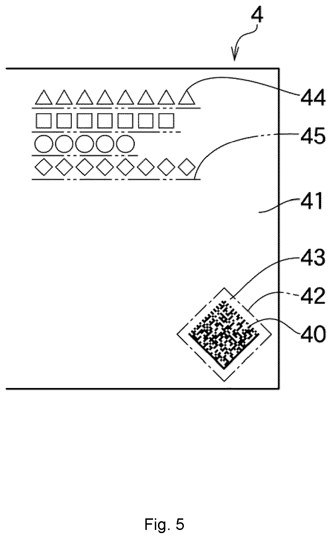

FIG. 5 is a front view of displaying a two-dimensional code 40 on a label 4. The label 4 which is a two-dimensional code display medium in this embodiment is an information display surface 41 as a whole. The label 4 has a display region 42 for displaying the two-dimensional code 40 on the information display surface 41. The display region 42 secures a margin 43. In this embodiment, an information string 44 is disposed on the information display surface 41, and an angle formed by one side of the two-dimensional code 40 and the imaginary ruled line 45 in the string direction of the information string 44 is oblique. Here, one side of the two-dimensional code 40 refers to one side of the square formed by cells of the code arranged in the square.

Here, the information string 44 is, for example, a string representing the specification of a product. The imaginary ruled line 45 of this embodiment actually displayed on the information display surface 41 are imaginary ones but may be displayed as actual ruled lines. Even in case where the imaginary ruled line 45 are not actually written, it is possible that the information strings 44 are recognized by a viewer by setting the character of the information string 44 or by setting the interline space.

By displaying the two-dimensional code 40 so that an angle formed by one side of the two-dimensional code 40 and the imaginary ruled line 45 in the string direction of the information string 44 becomes the oblique angle as in this embodiment, the two-dimensional code 40 is possible to be recognized as being obliquely displayed in the front view regardless of the shape of the information display surface 41. The label 4, which is the two-dimensional code display medium of this embodiment, recognizes an oblique representation of the code by comparing the code with the information display surface 41 while complying with the standard of the displayed code, and contributes to the discrimination of the code and the improvement of a profile.

Here, although the two-dimensional code 40 of this embodiment is a square, it may be another quadrangle, for example, a rectangle. Further, although the display region 42 of this embodiment is a square, the shape is not limited thereto as long as the two-dimensional code 40 formed by the square connotes otherwise. A boundary line may appear at positions of one-dot chain lines of the display region 42 of the label 4 in FIG. 5. In the present embodiment, the display region 42 is disposed at the lower right corner of the label 4, but the position of the display region 42 is not limited thereto, and may be anywhere in the vicinity of the corner portion and the side portion, the center portion, or the intermediate thereof. For example, the display region 42 may be in the vicinity of the information string 44, and the information string 44 may be arranged around the display region 42. In this embodiment, there is no limitation with regard to the size of the two-dimensional code 40 and the display area 42 nor to that of a relative size thereof to the label 4.

In each embodiment, goods having a rectangular planar information display surface such as a label, a packaging box or the like are illustrated as two-dimensional code display media. However, the two-dimensional code display media are not limited thereto. The present invention is possible to be applied to the goods having a curved surface on an information display surface such as a columnar, spherical, or the like, or the goods having an uneven surface on an information display surface; for example, the goods as an envelope, a vinyl bag, a can, a PET bottle, a pillow package and the like. If printing of the codes is acceptable to the goods, the present invention is possible to be applied and included in the technical scope of the present invention.

In addition, the oblique angle in each embodiment is preferably 30 to 60 degrees, and more preferably 45 degrees in degree measure. When the oblique angle is 30 to 60 degrees, the oblique representation of the code is not overlooked such that it recognized clearly. Also, 45 degrees is just half the angle of a right angle, and by displaying the code in front view at the oblique angle, the impression that the self-assertion is maintained while maintaining the regularity is displayed. The effect of giving it to the viewer is possible to be expected.

### [Description of the reference numerals]

1...label, 10...two-dimensional code, 11...information display surface, 12...display region, 13...margin:
2...packaging box, 20...two-dimensional code, 21...information display surface, 22...display region, 23...margin, 24...additional string:
3...label, 30...two-dimensional code, 31...information display surface, 32...display region, 33...margin:
4...label, 40...two-dimensional code, 41...information display surface, 42...display region, 43...margin, 44...information string, 45...imaginary ruled line.

## Claims

1. A two-dimensional code display medium including an information display surface having therein a display region for displaying the two-dimensional code,
**characterized in that** said information display surface and said display region are square, and one side of the two-dimensional code and one side of the information display surface form an oblique angle therebetween.

2. A two-dimensional code display medium including an information display surface having therein a display region for displaying the two-dimensional code,
**characterized in that** there are a plurality of the display regions, the first display region displays a two-dimensional code, the second display region displays a one-dimensional code or another two-dimensional code, and one side of the two-dimensional code in the first display region and one side of a straight line of the one-dimensional code or the two-dimensional code in the second display region form an oblique angle therebetween.

3. A two-dimensional code display medium including an information display surface having therein a display region for displaying the two-dimensional code,
**characterized in that** an information string is disposed on the information display surface, and an angle formed by one side of the two-dimensional code and the imaginary ruled line or the actual ruled line in the string direction of the information string is oblique.

4. A two-dimensional code display medium as in one of claims 1-3, in which displays an additional string on the outside of the two-dimensional code in parallel with one side of the two-dimensional code.

5. A two-dimensional code display medium as in one of claims 1-4, further comprising the oblique angle is 45 degrees.
